**Europäisches Patentamt**

**European Patent Office**

**Office européen des brevets**

(19)

(11) Veröffentlichungsnummer: **0 377 034**

**A1**

## (12) EUROPÄISCHE PATENTANMELDUNG
### veröffentlicht nach Art. 158 Abs. 3 EPÜ

(21) Anmeldenummer: **87902873.6**

(22) Anmeldetag: **24.03.87**

(86) Internationale Anmeldenummer:
**PCT/SU87/00034**

(87) Internationale Veröffentlichungsnummer:
**WO 88/07743 (06.10.88 88/22)**

(51) Int. Cl.5: **G11B 7/085**

(43) Veröffentlichungstag der Anmeldung:
**11.07.90 Patentblatt 90/28**

(84) Benannte Vertragsstaaten:
**CH DE FR GB IT LI SE**

(71) Anmelder: **RADIK, Tynu Arvovich**
**ul. Karu, 13-18**
**Tallin, 200010(SU)**

Anmelder: **SJUGIS, Anatol Jurievich**
**ul. Toome, 65**
**Tallin, 200009(SU)**

(72) Erfinder: **RADIK, Tynu Arvovich**
**ul. Karu, 13-18**
**Tallin, 200010(SU)**
Erfinder: **SJUGIS, Anatol Jurievich**
**ul. Toome, 65**
**Tallin, 200009(SU)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **MAGNETOELEKTRISCHER MECHANISMUS ZUR BEWEGUNG EINES OPTISCHEN KOPFES.**

(57) Magnetelektrisches Werk zur Verschiebung eines optischen Kopfes enthält einen zweiarmigen Hebel (1) mit einem optischen Kopf (4). In Löchern (7, 8) das Körpers der Arme (3,5) des Hebels (1) sind Zylinderwicklungen (9, 10) befestigt, die ein Ringjoch (13) mit einigem Spalt (11,12) umfassen. Symmetrisch bezüglich der Symmetrieebene des Ringjoches (13) und gleichachsig zu diesem sind weitere zwei Ringjoche (14,15) mit an diesen in unmittelbarer Nähe der Zylinderwicklungen (9,10) befestigten Dauermagneten (16,17,18,19) angeordnet.

FIG.1

# MAGNETELEKTRISCHES WERK ZUR VERSCHIEBUNG EINES OPTISCHEN KOPFES

## Gebiet der Technik

Die vorliegende Erfindung bezieht sich auf magnetelektrische Werke und betrifft insbesondere magnetelektrische Werke zur Verschiebung eines optischen Kopfes.

## Stand der Technik

Es ist ein magnetelektrisches Werk zur Verschiebung eines optischen Kopfes bekannt, das eine an einem der Arme eines zweiarmigen Hebels angeordnete Wicklung (FR,B, 2484683) aufweist.

In diesem Werk verschiebt sich die Wicklung in einem durch zwei Dauermagnete aufgebauten Magnetfeld, weshalb sich der zweiarmige Hebel um seine Drehachse umdreht. Die erreichbare Laufgeschwindigkeit des optischen Kopfes und dessen Laufgenauigkeit sind wegen eines geringen Wirkungsgrades des Werks niedrig. Dies ist auf eine große Ausdehnung von in Luft verlaufenden Abschnitten magnetischer Feldlinien zurückzuführen.

Es ist auch ein magnetelektrisches Werk zur Verschiebung eines optischen Kopfes bekannt, das einen zweiarmigen Hebel, der um seine Achse der angeordnet ist, an einem seiner Arme den optischen Kopf trägt und bei dem im Körper der beiden Arme Löcher ausgeführt sind, in denen symmetrisch zur Achse des zweiarmigen Hebels Zylinderwicklungen befestigt sind, die mit einigem Spalt ein durch die im Körper der beiden Arme des zweiarmigen Hebels ausgeführten Löcher durchgelassenes und fest angeordnetes Ringjoch umfassen, und zwei Dauermagnete enthält, die in unmittelbarer Nähe der Zylinderwicklungen auf einer dem genannten ersten Ringjoch zugekehrten Oberfläche eines anderen Ringjoches diametral befestigt sind, das fest und in einigem Abstand vom ersten genannten Ringjoch und koaxial zu diesem (EP, A, 0074131) angeordnet ist.

Bei derartiger konstruktiver Ausführung des oben beschriebenen Werks hängt ein durch den Magnetfluß durchsetzter (aktiver) Teil der Windungslänge der Zylinderwicklungen von der jeweiligen Windungsform ab. Bei einer quadratischen Windung ist nur eine von deren vier gleichlangen Seiten ein aktiver Teil. Bei dem Grenzzusammendrücken von Windungen in Richtung des Magnetflusses nähert sich der aktive Teil einer halben Windungslänge. Es ist aber, wie aus der konstruktiven Ausführung des oben beschriebenen Werks ersichtlich, eine Länge des aktiven Teiles von über 1/3 der Windungslänge schwer zu erreichen. Die geringe Größe des aktiven Teiles der Windung begrenzt ein Windung begrenzt ein durch das Werk entwickeltes Drehmoment und folglich auch die Laufgenauigkeit des optischen Kopfes und dessen Laufgeschwindigkeit.

Offenbarung der Erfindung

Der Erfindung liegt die Aufgabe zugrunde, ein magnetelektrisches Werk zur Verschiebung eines optischen Kopfes zu schaffen, bei dem ein derartiges Mittel zum Schließen von Magnetflüssen vorgesehen ist, das es gestattet, die Laufgenauigkeit des optischen Kopfes beträchtlich zu erhöhen und dessen Laufgeschwindigkeit zu steigern.

Dies wird dadurch erreicht, daß in dem magnetelektrischen Werk zur Verschiebung eines optischen Kopfes, das einen zweiarmigen Hebel, der um seine Achse drehbar angeordnet ist, an einem seiner Arme den optischen Kopf trägt und bei dem im Körper der beiden Arme Löcher ausgeführt sind, in denen symmetrisch zur Achse des zweiarmigen Hebels Zylinderwicklungen befestigt sind, die mit einigem Spalt ein durch die im Körper der beiden Arme des zweiarmigen Hebels ausgeführten Löcher durchgelassenes und fest angeordnetes Ringjoch umfassen, und zwei Dauermagnete enthalt, aie in unmittelbarer Nähe der Zylinderwicklungen auf einer dem genannten ersten Ringjoch zugekehrten Oberfläche eines anderen Ringjoches diametral befestigt sind, das fest und in einigem Abstand vom ersten genannten Ringjoch und koaxial zu diesem angeordnet ist, gemäß der Erfindung zwei weitere Dauermagnete mit ihrem eigenen Ringjoch vorgesehen sind, die in unmittelbarer Nähe der Zylinderwicklungen auf der Oberfläche dieses Joches diametral befestigt sind, das samt den auf seiner Oberfläche befestigten Dauermagneten symmetrisch zum zweiten genannten Ringjoch und den auf seiner Oberfläche befestigten Dauermagneten bezüglich der Symmetrieebene des ersten genannten Ringjoches angeordnet ist.

Derartige konstruktive Ausführung des zu patentierenden magnetelektrischen Werks zur Verschiebung eines optischen Kopfes gestattet es, die Laufgenauigkeit des optischen Kopfes und dessen Laufgeschwindigkeit zu erhöhen.

Kurzbeschreibung der Zeichnungen

Die Erfindung wird durch die nachstehende Beschreibung konkreter Ausführungsbeispiele anhand der beiliegenden Zeichnungen näher erläutert. Es zeigt

Fig. 1 die Gesamtansicht eines erfindungsgemäßen magnetelektrischen Werks zur Verschiebung eines optischen Kopfes (in axonometrischer Darstellung);

Fig. 2 die Anordnung von Dauermagneten an Ringjochen des Werks nach Fig. 1;

Fig. 3 eine andere Ausführungsform der Anordnung der Dauermagnete an den Ringjochen des erfindungsgemäßen Werks.

Beste Ausführungsformen der Erfindung

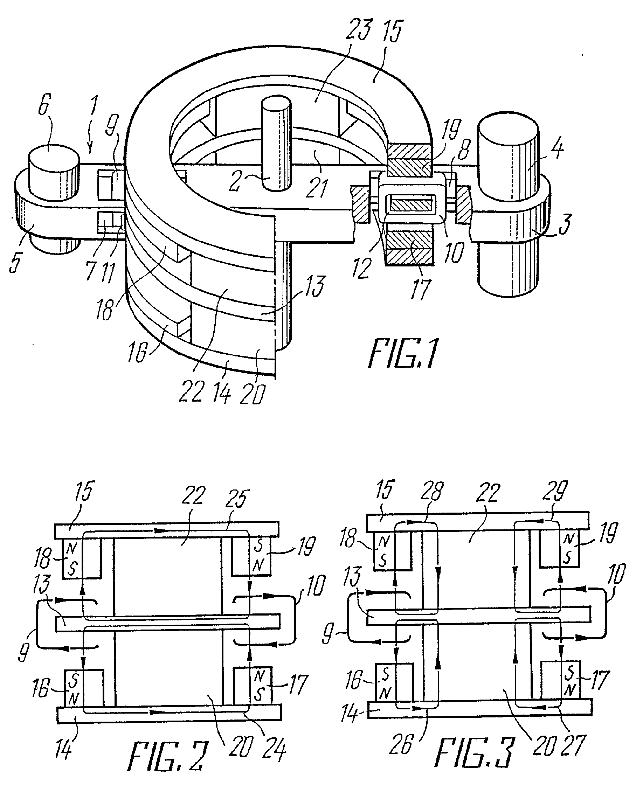

Das erfindungsgemäße magnetelektrische Werk zur Verschiebung eines optischen Kopfes enthält einen zweiarmigen Hebel 1 (Fig. 1), der um seine Achse 2 drehbar angeordnet ist und an seinem Arm 3 den optischen Kopf 4 eines Laser-Plattenspielers und an seinem anderen Arm 5 ein den optischen Kopf 4 ausgleichendes Gewicht 6 trägt. Im Körper der beiden Arme 3 und 5 sind symmetrisch zur Achse 2 des Hebels 1 Durchgangslöcher 7 und 8 ausgeführt, in denen auch symmetrisch um die Achse 2 des Hebels 1 Zylinderwicklungen 9 und 10 befestigt sind, die mit einigem Spalt 11 und 12 ein durch die Löcher 7 und 8 durchgelassenes Joch 13 umfassen.

In einigem Abstand vom Ringjoch 13 sind gleichachsig zu diesem zwei Ringjoche 14 und 15 angeordnet, die symmetrisch um die Symmetrieebene des Ringjoches 13 liegen.

Auf einer dem Ringjoch 13 zugewanden Oberfläche der Ringjoche 14 und 15 sind in unmittelbarer Nähe der Zylinderwicklungen 9 und 10 je zwei Dauermagnete 16, 17 bzw. 18, 19 diametral befestigt. Das Paar der Dauermagnete 16 und 17 am Ringjoch 14 ist symmetrisch zum Paar der am Ringjoch 15 angebrachten Dauermagnete 18 und 19 bezüglich der Symmetrieebene des Ringjoches 13 befestigt.

Sämtliche Dauermagnete 16, 17, 18 und 19 sind an deren Ringjochen 14 und 15 mit ungleichnamigen Polen N und S befestigt, wie dies in Fig. 2 gezeigt ist.

Die Ringjoche 13 (Fig. 1), 14 und 15 sind fest angeordnet. Diese feste Anordnung wird durch Einsätze 20, 21, 22 und 23 sichergestellt. Die Einsätze 20 und 21 sind am Ringjoch 14 zwischen den Dauermagneten 16 und 17 und die Einsätze 22 und 23 am Ringjoch 15 zwischen den Dauermagneten 18 und 19 diametral befestigt.

Bei der Befestigung der Dauermagnete 16, 17, 18 und 19 an den Ringjochen 14 und 15 mit den ungleichnamigen Polen N und S sind die Einsätze 20, 21, 22 und 23 aus unmagnetischem Material, beispielsweise aus Aluminium, hergestellt. Die Einsätze können aber auch aus weichmagnetischem Material hergestellt sein.

In der anderen Ausführungsform des erfindungsgemäßen magnetelektrischen Werkes zur Verschiebung eines optischen Kopfes sind die Dauermagnete 16, 17, 18 und 19 an ihren Jochen mit gleichnamigen Polen N, wie in Fig. 3 gezeigt, befestigt (es können auch Pole S sein). In diesem Fall sind die Einsätze 20, 21, 22 und 23 aus weichmagnetischem Material, beispielsweise aus niedriggekohltem Stahl, hergestellt.

Die Wirkungsweise des erfindungsgemäßen magnetelektrischen Werks zur Verschiebung eines optischen Kopfes besteht in folgendem.

Die magnetischen Feldlinien des einen der Magnetflüsse schließen im erfindungsgemäßen Werk über einen Kreis 24 (Fig. 2) in sich, der durch den Dauermagneten 16, das Ringjoch 14, den Dauermagneten 17, die unteren Teile der Windungen der Wicklung 10, das Ringjoch 13 und die unteren Teile der Windungen der Wicklung 9 gebildet ist. Die magnetischen Feldlinien des zum genannten Magnetfluß symmetrischen Magnetflusses schließen im erfindungsgemäßen Werk über einen Kreis 25 in sich, der durch den Dauermagneten 18, das Ringjoch 15, den Dauermagneten 19, die oberen Teile der Windungen der Wicklung 10, das Ringjoch 13 und die oberen Teile der Windungen der Wicklung 9 gebildet ist.

Aus Fig. 2 ist ersichtlich, daß die Einsätze 20 und 22 (ebenso wie die Einsätze 21 und 23) in die Kreise 24 und 25 nicht eingehen und daher, wie vorstehend beschrieben, sowohl aus unmagnetischem als auch weichmagnetischem Material hergestellt werden können.

Mögen die Ströme in den Wicklungen 9 (Fig. 1) und 10 zum betrachteten Zeitpunkt im Uhrzeigersinn in der Zeichnungsebene fließen, wie dies in Fig. 2 angedeutet ist.

Auf die Wicklung 9 wirken Kräfte ein, die durch die oberen und unteren Teile ihrer Windungen bedingt sind. Gemäß der Linkehandregel treten die beiden Kräfte aus der Zeichnungsebene heraus. Die ähnliche Betrachtungsweise im Hinblick auf die Wicklung 10 zeigt, daß die auf die Teile ihrer Windungen einwirkenden Kräfte in die Zeichnungsebene zeigen. Der zweiarmige Hebel 1, an dem die Wicklungen 9 und 10 befestigt sind, dreht sich also gegen den Uhrzeigersinn um, wenn man das erfindungsgemäße Werk von oben betrachtet. Die Umdrehung des zweiarmigen Hebels 1 bewirkt eine entsprechende Verschiebung des optischen Kopfes 4.

Die Wirkungsweise des erfindungsgemäßen Werks nach Fig. 3 ist analog der nach Fig. 1 und 2.

Der Unterschied besteht, wie in Fig. 3 gezeigt, darin, daß die magnetischen Feldlinien des Magnetflusses über kürzere Kreise in sich schließen. Der Kreis 26 ist durch den Dauermagneten 16, einen Teil des Ringjoches 14, den Einsatz 20, einen Teil des Ringjoches 13 und die unteren Teile der Windungen der Wicklung 10 gebildet. Der Kreis 28 ist durch den Dauermagneten 18, einen Teil des Ringjoches 15, den Einsatz 22, einen Teil des Ringjoches 13 und die oberen Teile der Windungen der Wicklung 9 gebildet. Der Kreis 29 ist durch den Dauermagneten 19, einen Teil des Ringjoches 15, den Einsatz 22, einen Teil des Ringjoches 13 und die oberen Teile der Windungen der Wicklung 10 gebildet.

Die Richtung der magentischen Feldlinien in den Kreisen 26, 27, 28 und 29 und die der Ströme in den Wicklungen 9 und 10 ist in Fig. 3 durch Pfeile angedeutet.

Die auf die Wicklung 9 einwirkenden Kräfte sind nach wie vor aus der Zeichenebene heraus gerichtet. Die auf die Wicklung 10 einwirkenden Kräfte zeigen in die Zeichenebene, denn gleichzeitig ist so die Richtung der magnetischen Feldlinien wie auch die der Ströme in der Wicklung 10 gewechselt.

In den beiden Ausführungsformen des erfindungsgemäßen Werks arbeiten sowohl die oberen als auch die unteren Teile der Windungen der beiden Wicklungen 9 (Fig. 1) und 10 auf. Der aktive Teil der Wicklungslänge dieser Wicklungen beträgt ca. 2/3 ihrer Länge. Dies gestattet es, ein größeres Drehmoment zu entwickeln und auf Grund dessen eine Zunahme der Laufgeschwindigkeit des optischen Kopfes und eine erhebliche Erhöhung der Laufgenauigkeit dieses Kopfes zu erzielen.

Bei der vorbestimmten Laufgenauigkeit und -geschwindigkeit des optischen Kopfes des erfindungsgemäßen Werks können die Dauermagnete aus Ferrit hergestellt werden. Diese Magnete sind viel billiger als Magnete, die aus Seltenerdmetallen gefertigt sind, was eine Verbilligung des gesamten Werks zur Folge hat.

Gewerbliche Anwendbarkeit

Das magnetelektrische Werk zur Verschiebung eines optischen Kopfes kann in optischen Speichern, Laser-Plattenspielern, besonders in Kompaktdisk-Spielern, zur genauen Verfolgung einer auf einem eines Kompaktdisk aufgezeichneten Informationsspur durch einen Lichtstrahl angewendet werden.

## PATENTANSPRUCH

Magnetelektrisches Werk zur Verschiebung eines optischen Kopfes, das einen zweiarmigen Hebel (1), der um seine Achse (2) drehbar angeordnet ist, an einem seiner Arme (3) den optischen Kopf (4) trägt und bei dem im Körper der beiden Arme (3, 5) Löcher (7, 8) ausgeführt sind, in denen symmetrisch zur Achse (2) des zweiarmigen Hebels (1) Zylinderwicklungen (9, 10) befestigt sind, die mit einigem Spalt (11, 12) ein durch die im Körper der beiden Arme (3,5) des zweiarmigen Hebels (1) ausgeführten Löcher (7, 8) durchgelassenes und fest angeordnetes Ringjoch (13) umfassen, und zwei Dauermagnete (16, 17) enthält, die in unmittelbarer Nähe der Zylinderwicklungen (9, 10) auf einer dem genannten ersten Ringjoch (13) zugekehrten Oberfläche eines anderen Ringjoches (14) diametral befestigt sind, das fest und in einigem Abstand vom ersten genannten Ringjoch (13) und koaxial zu diesem angeordnet ist, dadurch gekennzeichnet, daß darin zwei weitere Dauermagnete (18, 19) mit ihrem eigenen Ringjoch (15) vorgesehen sind, die in unmittelbarer Nähe der Zylinderwicklungen (9, 10) auf der Oberfläche dieses Joches(15) diamentral befestigt sind, das samt den auf seiner Oberfläche befestigten Dauermagneten (18, 19) symmetrisch zum zweiten genannten Ringjoch (14) und den auf seiner Oberfläche befestigten Dauermagneten (16, 17) bezüglich der Symmetrieebene des ersten genannten Ringjoches (13) angeordnet ist.

FIG.1

FIG.2

FIG.3

## I. CLASSIFICATION OF SUBJECT MATTER (if several classification symbols apply, indicate all) [6]

According to International Patent Classification (IPC) or to both National Classification and IPC

$$IPC^4 - G\ 11\ B\ 7/085$$

## II. FIELDS SEARCHED

### Minimum Documentation Searched [7]

| Classification System | Classification Symbols |
|---|---|
| $IPC^4$ | G 11 B 7/08, 7/085 |

### Documentation Searched other than Minimum Documentation to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | EP, A1, 0074131, (N.V. Philips' Gloeilampenfabrieken), 16 March 1983 (16.03.83), see figure 2, cited in the description | 1 |
| A | DE, A1, 2630381, (Pioneer Electronic Corp.), 21 January 1977 (27.01.77), see figure 10 | 1 |
| A | DE, A1, 3027950, (Universal Pioneer Corp.), 19 February 1981 (19.02.81), see figure 2 | 1 |
| A | DE, A1, 3119493, (Sony Corp.), 06 May 1982 (06.05.82), see figures 5,6,7 | 1 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 November 1987 (24.11.87) | 18 December 1987 (18.12.87) |

| International Searching Authority | Signature of Authorized Officer |
|---|---|
| ISA/SU | |

Form PCT/ISA/210 (second sheet) (January 1985)